# EUROPÄISCHE PATENTANMELDUNG

(11) **EP 2 873 895 A1**
(43) Veröffentlichungstag der Anmeldung: **20.05.2015**
(21) Anmeldenummer: 13193501.7
(22) Anmeldetag: 19.11.2013
(51) Int. Cl.: F16J 15/32

(54) **Wellendichtung und Verfahren zur Herstellung derselben**

(71) Anmelder: Siemens Aktiengesellschaft, 80333 München (DE)
(72) Erfinder: Schneider, Oliver, 46487 Wesel (DE)

(57) **Zusammenfassung**

Die Erfindung betrifft eine Wellendichtung (10) zur Reduzierung der Leckage zwischen zwei durch die Wellendichtung (10) getrennte Fluidräume (2, 4), insbesondere zwei axial zu einer Welle (1) angeordnete Gasräume, wobei die Wellendichtung (10) mehrere flexible Plattenelemente (12) umfasst, die in einer Aufnahme (15) fixiert sind, wobei die Aufnahme (15) einen ersten Durchmesser (17) der Wellendichtung (10) darstellt, und wobei die der Aufnahme (15) abgewandten Enden (13) der Plattenelemente (12) einen zweiten Durchmesser (18) definieren, dadurch gekennzeichnet, dass die Plattenelemente (12) an den der Aufnahme (15) abgewandten Enden (13) Ausnehmungen (16) aufweisen.

## Beschreibung

Die vorliegende Erfindung betrifft eine Wellendichtung zur Reduzierung der Leckage zwischen zwei durch die Wellendichtung getrennten Fluidräumen, sowie ein Verfahren zur Herstellung einer Wellendichtung.

Bei Gasturbinen, Turboladern oder Verdichtern werden Gase entlang ihrer Durchflussrichtung axial zu einer rotierenden Welle in einem in der Regel mehrstufigen Prozess verdichtet oder entspannt. Um den Wirkungsgrad eines Verdichters oder einer Turbine zu erhöhen, wird dabei ein Gasraum vor einer entsprechenden Verdichter- oder Expansionsstufe gegenüber einem Gasraum hinter dieser Verdichter- oder Expansionsstufe abgedichtet, um die Leckage zu reduzieren. Dazu werden u.a. Labyrinthdichtungen, Bürstendichtungen oder sogenannte Blattdichtungen (engl. leaf seal) verwendet.

Labyrinthdichtungen sind klassische Dichtelemente im Turbomaschinenbau. Sie werden gut beherrscht und sind für die Hersteller vergleichsweise einfach und kostengünstig zu fertigen. Nachteile der Labyrinthdichtungen liegen in der vergleichsweise geringen Toleranz für große Läuferbewegungen, die häufig großen Verschleiß zur Folge haben. Als Verbesserung ist der Konstrukteur gezwungen, entsprechend große Spaltmaße bereitzustellen, was sich negativ auf die Dichtwirkung und die Leistung auswirkt.

Bürstendichtungen und Blattdichtungen sind Dichtkonzepte, welche dem Rotor im Betrieb ausweichen. Bürstendichtungen weisen Drahtpakete auf, welche in alle Richtungen elastisch sind und daher schlecht geeignet, um eine höhere Druckdifferenz abzudichten, da die Bürsten ausweichen. Zur Unterstützung der Bürsten werden zum Teil Stützringe vorgesehen. Kommt der Rotor der Bürste näher, so federt diese zurück, wobei bei höheren Druckdifferenzen ein vergleichsweise breiter Spalt entsteht. Blattdichtungen bieten hier deutliche Vorteile, da die einzelnen Plattenelemente der Blattdichtungen deutlich steifer als die Bürsten der Bürstendichtung sind. Blattdichtungen haben gegenüber Bürstendichtungen jedoch den Nachteil, dass die Plattenelemente beim Anlaufen einer rotierenden Welle ein vergleichsweise hohes Reibmoment erzeugen. Durch die Ausbildung eines engen, aber axial längeren Dichtspaltes entlang der Grenze zweier benachbarter Plattenelemente muss sich der Konstrukteur beim Einsatz einer Blattdichtung auf den Erhalt dieses Dichtspaltes über die Betriebsdauer der Blattdichtung verlassen. Eine Anordnung von mehreren Bürstendichtungen oder Blattdichtungen hintereinander ist aus Bauraum- und Kostengründen unüblich. Aus der EP 1 302 708 ist eine Blattdichtung zur Abdichtung einer Welle in einer Turbomaschine bekannt. Aus der EP 1 890 059 ist eine Blattdichtung bekannt, welche das Prinzip der Blattdichtung zusätzlich um eine Labyrinthdichtung zwischen Plattenelement und Gehäuse erweitert.

Aufgabe der Erfindung ist es, eine Wellendichtung bereitzustellen, welche bei gleichen Rahmenbedingungen mechanisch und/oder thermisch weniger belastet wird als die bekannten Dichtkonzepte.

Die erfindungsgemäße Wellendichtung zur Reduzierung der Leckage zwischen zwei durch die Wellendichtung getrennte Fluidräume, insbesondere zwei axial zu einer Welle angeordnete Gasräume, umfasst mehrere flexible Plattenelemente, die in einer Aufnahme fixiert sind, wobei die Aufnahme einen ersten Durchmesser der Wellendichtung darstellt, und wobei die der Aufnahme abgewandten Enden der Plattenelemente einen zweiten Durchmesser definieren, dadurch gekennzeichnet, dass die Plattenelemente an den der Aufnahme abgewandten Enden Ausnehmungen aufweisen.

Die erfindungsgemäße Wellendichtung bietet den Vorteil, dass durch die Ausnehmungen an dem der Aufnahme abgewandten Ende der Plattenelemente das Anlauf- bzw. Reibmoment zwischen den Plattenelementen und der Welle bzw. einem Gehäuse reduziert ist. Durch das geringere Reibmoment ist auch der Wärmeeintrag in die Plattenelemente reduziert, so dass die Plattenelemente ggf. mit kleineren Spalten in der Aufnahme geführt werden können.

Durch die in den abhängigen Ansprüchen angeführten Maßnahmen sind vorteilhafte Weiterbildungen und Verbesserungen der im unabhängigen Anspruch angegebenen Wellendichtung möglich.

Eine vorteilhafte Weiterbildung besteht darin, dass in den Plattenelementen weitere Ausnehmungen vorgesehen sind. Durch die weiteren Ausnehmungen kann die Steifigkeit der Plattenelemente radial zur Welle, d.h. in Rotationsrichtung der Welle weiter reduziert werden und somit das Anlaufmoment weiter reduziert werden. Ferner bleibt durch die Ausnehmungen die Steifigkeit axial zur Welle, d.h. in Dichtrichtung der Plattenelemente, weitestgehend erhalten. Besonders vorteilhaft ist dabei, wenn die Ausnehmungen in Wabenform oder in Karoform angeordnet sind. Durch eine solche Formgebung können in die Plattenelemente kleine Wirbelkammern eingebracht werden, wobei durch die entstehenden Wirbelkammern die Reibfläche verkleinert wird und ein Wärmeeintrag bei mechanischem Kontakt zwischen Plattenelement und Welle reduziert ist. Die Ausbildung der Wirbelkammern ist auch deshalb vorteilhaft, weil so gegenüber einer Labyrinthdichtung der Drallanteil der Strömung besonders gut dissipiert werden kann.

Weiterhin ist mit Vorteil vorgesehen, dass der erste Durchmesser ein Außendurchmesser der Wellendichtung und der zweite Durchmesser ein Innendurchmesser der Wellendichtung ist. In dieser Konstellation bildet die Aufnahme den Außendurchmesser der Wellendichtung, wobei sich die Aufnahme einfach und kostengünstig in einem Gehäuse fixieren lässt. Eine weitere Weiterbildung der erfindungsgemäßen Wellendichtung besteht darin, dass die Plattenelemente einen ersten Randbereich und einen zweiten Randbereich aufweisen, wobei der zweite Randbereich breiter als der erste Randbereich ist. Durch ein asymmetrisch gestaltetes Plattenelement bieten sich mehrere Vorteile. Zum einen kann der zweite, breitere Randbereich bei einer gleichgerichteten, parallelen Anordnung eine besonders gute Dichtwirkung entfalten. Zum anderen kann durch eine solche asymmetrische Gestaltung der Plattenelemente, insbesondere wenn die Breite des zweiten Randbereichs um ca. die Breite einer Ausnehmung breiter als der erste Randbereich ist, die Möglichkeit geschaffen, mit nur einer Variante von Plattenelementen eine Dichtung zu realisieren, bei der die jeweiligen Ausnehmungen in einem Plattenelement durch Stege, welche zwischen den Ausnehmungen angeordnet sind, im nachfolgenden, um 180° gedreht angeordneten Plattenelement, komplett verdeckt werden. Dazu werden die Stege breiter als die Ausnehmungen ausgeführt, um eine komplette Abdeckung der Ausnehmung durch einen Steg zu ermöglichen.

Weiterhin ist mit Vorteil vorgesehen, dass die Wellendichtung zumindest ein Plattenelement aufweist, welches keine Ausnehmungen aufweist, d.h. zwischen den Plattenelementen mit Ausnehmungen ist zumindest ein Plattenelement ohne Ausnehmungen angeordnet. Durch ein solches Plattenelement ohne Ausnehmungen kann die Dichtwirkung erhöht werden, wobei die Reibung und somit das Anlaufmoment durch ein Plattenelement ohne Ausnehmungen oder einzelne, bevorzugt über den Umfang verteilte Plattenelemente ohne Ausnehmungen nur unwesentlich erhöht ist.

Eine weitere vorteilhafte Weiterbildung besteht darin, dass Erhebungen auf einer Welle in die Ausnehmungen der Plattenelemente eingreifen, wenn die Wellendichtung an der Welle montiert ist. Bei einer gleichgerichteten Anordnung der Plattenelemente kann hier je nach Höhe der Erhebungen entweder eine zusätzliche Labyrinthdichtung in den Ausnehmungen der Plattenelemente erzielt werden, es können jedoch auch kleine Erhebungen auf der Welle vorhanden sein, welche an der Dichtkante zwischen Plattenelement und Welle Wirbel erzeugen, wobei durch die Wirbel im Bereich der Dichtkante die Dichtwirkung erhöht wird.

Die Erfindung bezieht sich ferner auf ein Verfahren zur Herstellung einer Wellendichtung, wobei insbesondere vorgesehen ist, dass nur eine Variante von asymmetrischen Plattenelementen vorgesehen ist, welche beispielsweise kostengünstig als Spritzgussteile und Stanzteile hergestellt werden können. Dabei wird jedes zweite Plattenelement um jeweils 180° gedreht zum benachbarten Plattenelement angeordnet, so dass die Ausnehmungen eines Plattenelementes jeweils durch die Stege des benachbarten Plattenelements vollständig versperrt werden.

Im Folgenden werden Ausführungsbeispiele einer erfindungsgemäßen Wellendichtung anhand der beigefügten Zeichnungen erläutert. Gleiche Bauteile oder Bauteile mit gleicher Funktion sind dabei mit gleichen Bezugszeichen gekennzeichnet.
Fig. 1 zeigt eine Welle mit einer erfindungsgemäßen Wellendichtung.
Fig. 2 zeigt einen radialen Schnitt durch die Welle mit einer erfindungsgemäßen Wellendichtung.
Fig. 3 zeigt ein Plattenelement einer erfindungsgemäßen Wellendichtung.
Fig. 3a zeigt ein alternatives Plattenelement einer erfindungsgemäßen Wellendichtung.
Fig. 3b zeigt ein weiteres Ausführungsbeispiel eines Plattenelements einer erfindungsgemäßen Wellendichtung.
Fig. 4 zeigt eine Anordnung von mehreren Plattenelementen einer erfindungsgemäßen Wellendichtung.

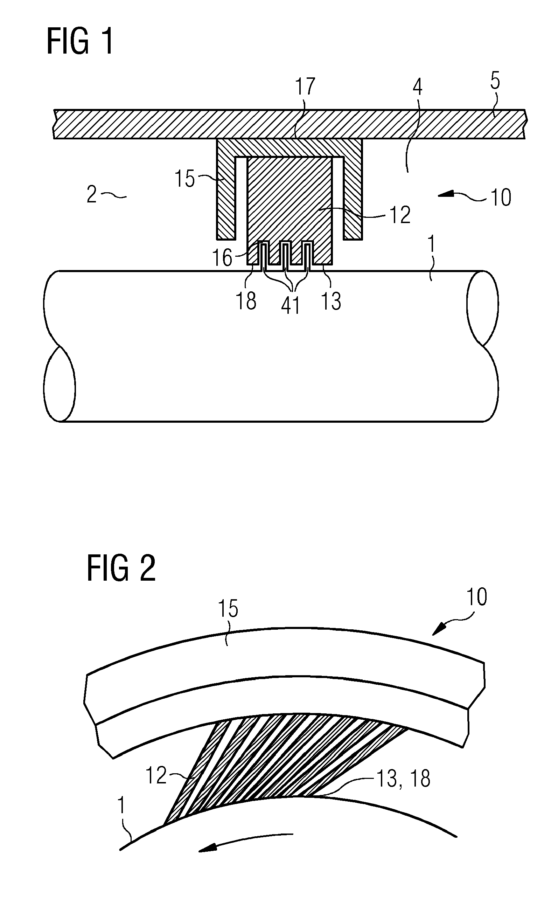

In Fig. 1 ist ein Ausführungsbeispiel einer erfindungsgemäßen Wellendichtung 10 dargestellt. Die Wellendichtung 10 weist eine Aufnahme 15 auf, in der mehrere flexible Plattenelemente 12 fixiert sind. Die Wellendichtung 10 ist in ein Gehäuse 5 eingesetzt, wobei die Aufnahme 15 an dem Gehäuse 5, beispielsweise durch Formschluss über einen Einpressvorgang, fixiert ist. Die dem Gehäuse 5 zugewandte Seite der Aufnahme 15 definiert dabei einen ersten Durchmesser 17. Die Plattenelemente 12 weisen an der Aufnahme 15 abgewandte Enden 13 in Richtung einer Welle 1, wobei die Enden 13 der Plattenelemente 12 bei Stillstand der Welle 1 an der Welle 1 anliegen. Durch die Wellendichtung 10 wird in axialer Richtung entlang der Welle 1 ein erster Fluidraum 2 von einem zweiten Fluidraum 4 abgedichtet. Die Enden 13 der Plattenelemente 12 definieren dabei einen zweiten Durchmesser 18.

Die Plattenelemente 12 weisen an ihren der Welle 1 zugewandten Enden 13 Ausnehmungen 16 auf, welche durch Stege 19 voneinander getrennt sind. An der Welle 1 können Erhebungen 41 ausgebildet sein, welche den Ausnehmungen 16 der Plattenelemente 12 gegenüber angeordnet sind und in die Ausnehmungen 16 eingreifen können. Durch in die Ausnehmungen 16 eingreifende Erhebungen 41 entsteht ein Labyrinth, welches die Dichtwirkung in axialer Richtung entlang der Plattenelemente 12 erhöht.

Im Betrieb dreht sich die Welle 1, wobei die Plattenelemente 12 der Wellendichtung 10 in der Anlaufphase zunächst noch an der Welle 1 anliegen und aufgrund der Dynamik ab einer bestimmten Wellendrehzahl von der Welle 1 unter Bildung eines Dichtspalts 11 abheben. In Fig. 2 ist eine rotierende Welle 1 in einem radialen Schnitt dargestellt, wobei ein Pfeil die Rotationsrichtung der Welle 1 anzeigt. Durch die Ausnehmungen 16 wird sowohl eine Kontaktfläche zwischen Plattenelement 12 als auch die Steifigkeit der Plattenelemente 12 reduziert, was zu einer Abnahme der Reibung und somit des Wärmeeintrags in die Plattenelemente 12 beim Anlaufvorgang führt.

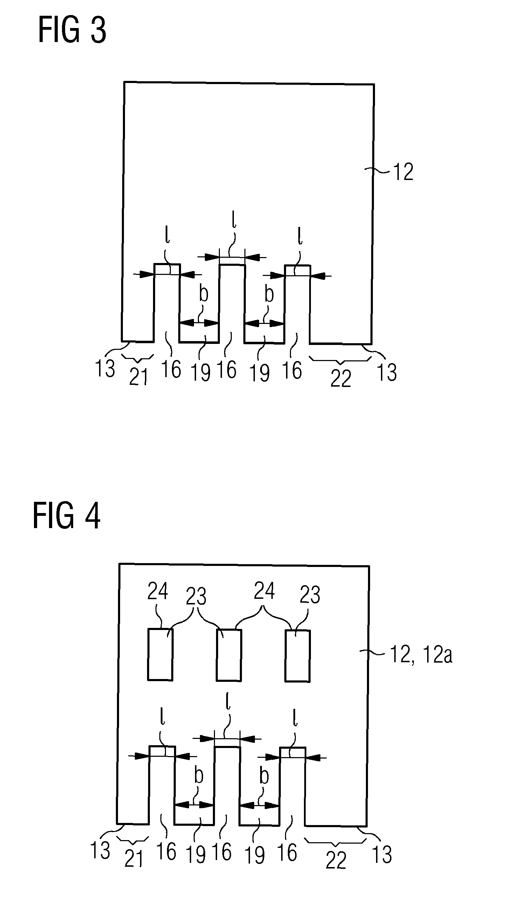

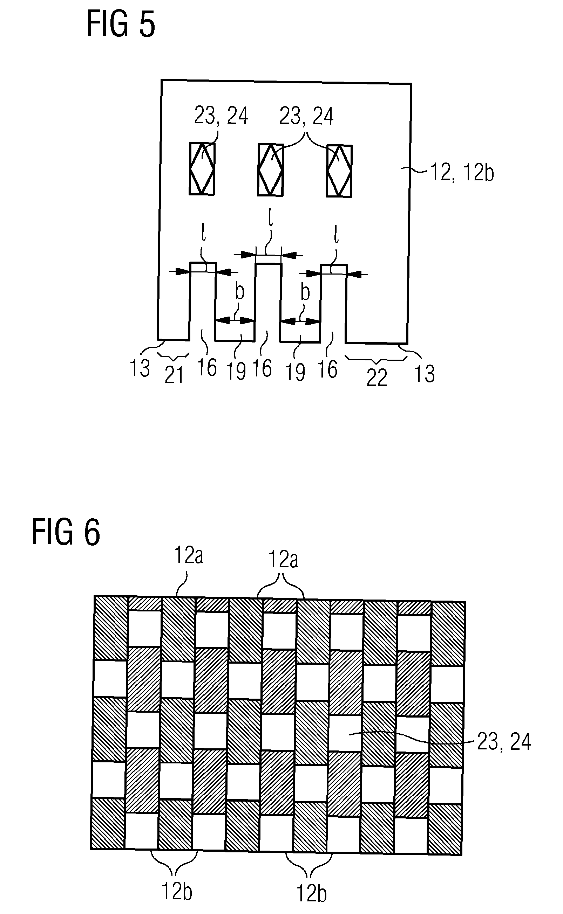

In Fig. 3 ist ein Ausführungsbeispiel eines Plattenelements 12 einer erfindungsgemäßen Wellendichtung 10 offenbart. Das Plattenelement 12 weist an seinem Ende 13 Ausnehmungen 16 auf, welche durch Stege 19 getrennt sind. Dabei weist das Plattenelement 12 eine asymmetrische Form auf, wobei das Plattenelement 12 im Bereich der Ausnehmungen 16 von einem ersten Randbereich 21 und einem zweiten Randbereich 22 begrenzt ist. Die Ausnehmungen 16 weisen eine Breite 1 auf, welche kleiner ist als eine Breite b der Stege 19. Der erste Randbereich 21 ist dabei ca. um die Breite 1 schmaler als der zweite Randbereich 22.

In Fig. 3a ist ein alternatives Ausführungsbeispiel eines Plattenelements 12 gezeigt, welches bei weitestgehend gleichem Aufbau zu der Ausführungsform gemäß Fig. 3 zusätzlich weitere Ausnehmungen 23 aufweist, welche beispielsweise karoförmig oder rautenförmig ausgebildet sind. Durch die weiteren Ausnehmungen 23 wird die Wärmeleitfähigkeit der Plattenelemente 12 und die Steifigkeit in radialer Richtung zu der Welle 1 weiter herabgesetzt, während die Steifigkeit in axialer Richtung weitestgehend erhalten bleibt. Durch die weiteren Ausnehmungen 23 entstehen Wirbelkammern 24. Bei einer glatten Oberfläche der Plattenelemente 12 wird die Strömung weniger turbulent, so dass sich nach dem Einlaufwirbel eine saubere Spaltströmung entwickelt, die den Durchfluss durch den Spalt begünstigt. Dies ist bei einem Dichtelement jedoch nicht erwünscht. Daher wird durch die Wirbelkammern 24 zusätzliche Turbulenz erzeugt, welche die Dichtwirkung zwischen zwei benachbarten Plattenelementen 12 erhöht. Bei mechanischem Kontakt zwischen dem Plattenelement 12 und der Welle 1 ist der Wärmeeintrag stark reduziert, weil durch die Ausnehmungen 16 und Wirbelkammern 24 die Reibfläche verkleinert wird und die Wärmeleitung entlang des Plattenelements 12 reduziert ist.

In Fig. 3b ist ein weiteres Ausführungsbeispiel eines Plattenelements 12 gezeigt. Dabei ist das Plattenelement 12a gegenüber der Darstellung in Fig. 3a um 180° gedreht als Plattenelement 12b dargestellt. Ordnet man die Plattenelemente 12 jeweils um 180° gedreht zueinander an, so dass jeweils ein Plattenelement 12a mit einem Plattenelement 12b benachbart ist, so überdecken die Stege 19 des Plattenelements 12a jeweils die Ausnehmungen 16 des Plattenelements 12b und die Stege 19 des Plattenelements 12b die Ausnehmungen 16 des Plattenelements 12a, wobei zwischen den Plattenelementen 12a, 12b durch die weiteren Ausnehmungen 23 jeweils Wirbelkammern 24 entstehen. Eine solche Anordnung von mehreren Plattenelementen 12a, 12b über den Umfang der Wellendichtung 10 ist in Fig. 4 dargestellt.

Alternativ kann auch mindestens ein Plattenelement 12 durch ein Plattenelement ohne Ausnehmungen ersetzt werden, um die Dichtwirkung zu erhöhen. Alternativ dazu können auch über den Umfang der Wellendichtung 10 vereinzelt, bevorzugt über den Umfang gleichmäßig verteilt, Plattenelemente 12 ohne Ausnehmungen angeordnet werden.

Ferner kann eine Welle 1 auch Erhebungen 41 aufweisen, welche im dynamischen Betrieb der Welle 1 nicht, oder nur unwesentlich in die Ausnehmungen 16 der Plattenelemente 12 eingreifen. Anstelle einer Labyrinthdichtung entstehen so entlang der Welle 1 kleine Wirbel, welche die Dichtwirkung gegenüber einer planen Welle 1 ebenfalls erhöhen können.

Obwohl die Erfindung im Detail durch die bevorzugten Ausführungsbeispiele näher beschrieben wurde, so ist die Erfindung nicht auf die offenbarten Ausführungsbeispiele beschränkt und andere Variationen können vom Fachmann hieraus abgeleitet werden, ohne den Schutzumfang der Erfindung zu verlassen.

## Patentansprüche

1. Wellendichtung (10) zur Reduzierung der Leckage zwischen zwei durch die Wellendichtung (10) getrennte Fluidräume (2, 4), insbesondere zwei axial zu einer Welle (1) angeordnete Gasräume, wobei die Wellendichtung (10) mehrere flexible Plattenelemente (12) umfasst, die in einer Aufnahme (15) fixiert sind, wobei die Aufnahme (15) einen ersten Durchmesser (17) der Wellendichtung (10) darstellt, und wobei die der Aufnahme (15) abgewandten Enden (13) der Plattenelemente (12) einen zweiten Durchmesser (18) definieren, **dadurch gekennzeichnet, dass** die Plattenelemente (12) an den der Aufnahme (15) abgewandten Enden (13) Ausnehmungen (16) aufweisen.

2. Wellendichtung (10) nach Anspruch 1, **dadurch gekennzeichnet, dass** die Plattenelemente (12) weitere Ausnehmungen (23), insbesondere wabenförmige oder karoförmige Ausnehmungen, aufweisen.

3. Wellendichtung (10) nach Anspruch 2, **dadurch gekennzeichnet, dass** die weiteren Ausnehmungen (23) Wirbelkammern (24) ausbilden.

4. Wellendichtung (10) nach einem der Ansprüche 1 bis 3, **dadurch gekennzeichnet, dass** der erste Durchmesser (17) ein Außendurchmesser der Wellendichtung (10) und der zweite Durchmesser (18) ein Innendurchmesser der Wellendichtung (10) ist.

5. Wellendichtung (10) nach einem der Ansprüche 1 bis 4, **dadurch gekennzeichnet, dass** die Plattenelemente (12) einen ersten Randbereich (21) und einen zweiten Randbereich (22) aufweisen, wobei der zweite Randbereich (22) breiter als der erste Randbereich (21) ist.

6. Wellendichtung (10) nach Anspruch 5, **dadurch gekennzeichnet, dass** der zweite Randbereich (22) ca. um die Breite einer Ausnehmung (16) breiter als der erste Randbereich (21) ist.

7. Wellendichtung (10) nach einem der Ansprüche 1 bis 6, **dadurch gekennzeichnet, dass** zwischen den Ausnehmungen (16) Stege (19) vorgesehen sind.

8. Wellendichtung (10) nach Anspruch 7, **dadurch gekennzeichnet, dass** die Stege (19) breiter als die Ausnehmungen (16) sind.

9. Wellendichtung (10) nach Anspruch 8, **dadurch gekennzeichnet, dass** die Plattenelemente (12) abwechselnd um 180° gedreht angeordnet sind, so dass eine vollständige Versperrung der Ausnehmungen (16) oder der weiteren Ausnehmungen (23) eines Plattenelements (12a) durch die Stege (19) des nachfolgend angeordneten Plattenelements (12b) erfolgt.

10. Wellendichtung (10) nach einem der Ansprüche 1 bis 9, **dadurch gekennzeichnet, dass** zwischen den Plattenelementen (12) zumindest ein Plattenelement (32) angeordnet ist, welches keine Ausnehmungen (16, 23) aufweist.

11. Wellendichtung (10) nach einem der Ansprüche 1 bis 6, **dadurch gekennzeichnet, dass** Erhebungen (41) auf einer Welle (1) in die Ausnehmungen (16) der Plattenelemente (12) eingreifen, wenn die Wellendichtung (10) an der Welle (1) montiert ist.

12. Gasturbine mit einer Wellendichtung (10) nach einem der Ansprüche 1 bis 11.

13. Verfahren zur Herstellung einer Wellendichtung (10) zur Reduzierung der Leckage zwischen zwei durch die Wellendichtung (10) getrennten Fluidräumen (2, 4), wobei die Wellendichtung (10) insbesondere zur Trennung zweier axial zu einer Welle (1) liegenden Gasräume angeordnet wird, wobei mehrere flexible Plattenelemente (12) in einer Aufnahme (15) fixiert werden, wobei durch die Aufnahme (15) ein erster Durchmesser (17) der Wellendichtung (10) definiert wird, und wobei durch die der Aufnahme (15) abgewandten Enden (13) der Plattenelemente (12) ein zweiter Durchmesser (18) definiert wird, **dadurch gekennzeichnet, dass** in die Plattenelemente (12) an dem der Aufnahme (15) abgewandten Ende (13) Ausnehmungen (16) eingebracht werden.

14. Verfahren zur Herstellung einer Wellendichtung (10) nach Anspruch 13, **dadurch gekennzeichnet, dass** jedes zweite Plattenelement (12) um jeweils 180° gedreht angeordnet wird, so dass die Ausnehmungen (16) eines Plattenelements (12a) durch Stege (19) des nachfolgenden Plattenelements (12b) vollständig versperrt werden.
